**Europäisches Patentamt**

**European Patent Office**

**Office européen des brevets**

(19)

(11) Publication number: **0 143 604**
**B1**

(12) # EUROPEAN PATENT SPECIFICATION

(45) Date of publication of patent specification: **15.07.87**

(51) Int. Cl.⁴: **B 60 T 1/00**

(21) Application number: **84308079.7**

(22) Date of filing: **21.11.84**

(54) **Parking lock system for a vehicle.**

(30) Priority: **29.11.83 JP 225127/83**

(43) Date of publication of application:
**05.06.85 Bulletin 85/23**

(45) Publication of the grant of the patent:
**15.07.87 Bulletin 87/29**

(84) Designated Contracting States:
**CH DE FR GB IT LI NL**

(56) References cited:
**GB-A-1 398 235**
**GB-A-2 029 530**
**JP-A-55 164 527**
**US-A-3 690 416**

(73) Proprietor: **FUJI JUKOGYO KABUSHIKI KAISHA**
**7-2 Nishi Shinjuku 1-chome Shinjuku-ku**
**Tokyo (JP)**

(72) Inventor: **Yamada, Kenichi**
**3829 Jindaiji**
**Mitaka-shi Tokyo (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

EP 0 143 604 B1

## Description

The present invention relates to a parking lock system for a vehicle having an automatic transmission.

When a vehicle with an automatic transmission is parked on a slope, it is necessary to lock the output shaft of the transmission because the transmission is disengaged from the engine which therefore can provide no braking effect on the wheels.

In order to lock the output shaft of the transmission, a parking gear is provided on that output shaft, and is put into engagement with a parking pawl to lock the shaft on parking, so as to prevent rotation of the output shaft. Japanese Laid-open Specification No. 55—164527, corresponding to the preamble of claim 1, has disclosed such a construction comprising a parking gear and a parking pawl engaged with each other for parking by means of a cam provided on a parking rod and disengaged from one another, when the vehicle is to be driven, by retracting the cam and by means of a return spring acting on the pawl.

The known parking lock mechanism is usually assembled by attaching a cover, which contains a lock system comprising a parking pawl, a return spring and other parts, to the transmission case. However, the assembling of the cover to the transmission case, with each part in its position on the inside of the cover, is difficult, because the return spring always biases the parking pawl out of position.

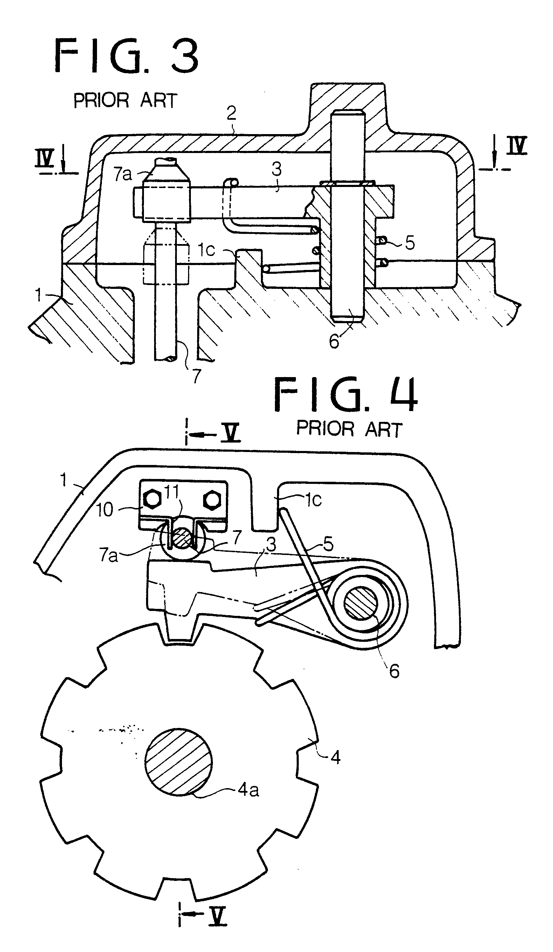

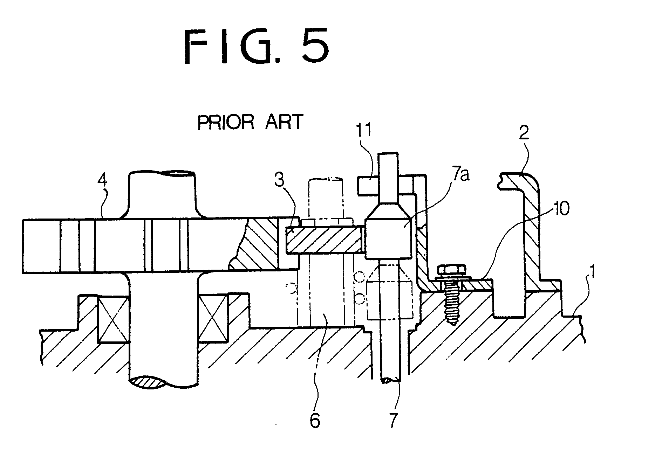

A similar known parking lock mechanism is shown in Figures 3 to 5. As there shown, an automatic transmission case 1 has a cover 2 secured thereon to cover a parking gear 4 mounted on an output shaft 4a on the open side of the case 1. A shaft 6 bridges the space between the case 1 and the cover 2 and pivotally supports a parking pawl 3. When the vehicle is parked a parking rod 7 is shifted from the position shown in chain line to the position shown in full line, bringing a parking cam 7a secured to the rod 7 into a gap between a support plate 10 and the pawl 3 so that the pawl 3 is rotated by the cam 7a to engage with the gear 4 and rotation of the output shaft 4a of the transmission is prevented. When the vehicle is started, the parking cam 7a is retracted from the pawl 3 allowing a return spring 5 to move the pawl out of engagement from the gear 4. This spring 5 is engaged at one end on a projection 1c of the case 1, and at the other end on a side face of the parking pawl 3, and biases the pawl 3 away from the gear 4.

With this construction, the assembling of the parking lock system is time consuming; because shaft 6 is subject to a component of the bias force of the spring 5 and tends to be displaced from its required position. Hence it is necessary to hold the parking pawl 3 in place against the action of the spring 5 during assembly.

It is an object of the present invention to render the parking lock system more easily assembled than known parking lock systems.

According to the present invention, a guide plate is engaged with the shaft of the pawl at one end thereof and is engaged with the case of the transmission at the other end and is provided with a stop for the pawl, and the spring is arranged to bias the parking pawl against the stop of the guide plate to hold the parking pawl disengaged from the parking gear.

The guide plate is preferably rotatably mounted on the shaft, and the other end of the guide plate is engaged with a recess in the case. The cam may be provided on a parking rod which is axially moved to engage the parking pawl with the parking gear, and a guide groove may be formed in the guide plate so as to guide the parking rod.

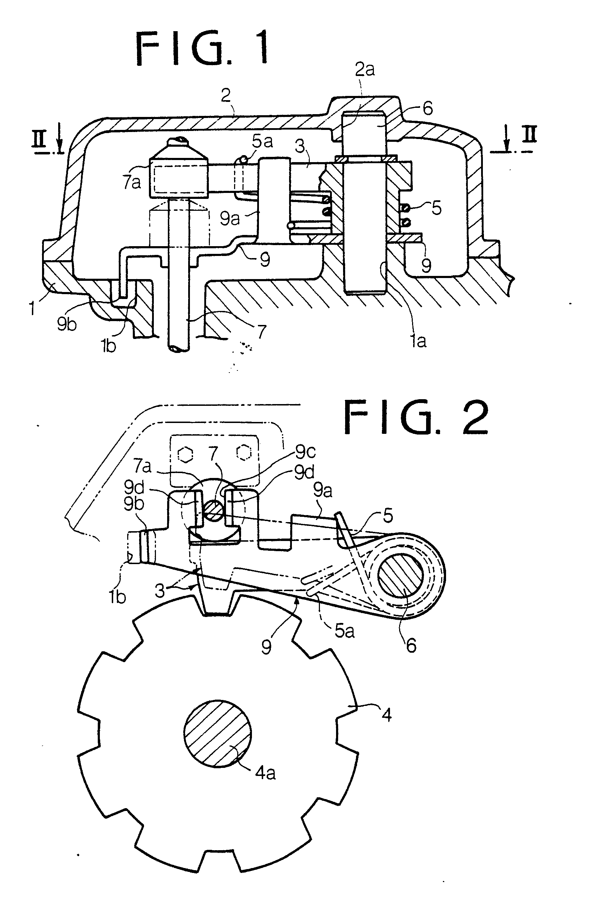

The invention will be more readily understood by way of example from the following description of a locking system in accordance therewith, reference being made to Figures 1 and 2 of the accompanying drawings. In the drawings:

Figure 1 is a sectional view showing the parking lock system;

Figure 2 is a section on the line II—II of Figure 1, the cover having been removed;

Figure 3 is a view similar to Figure 1, but showing a known system;

Figure 4 is a sectional view taken along the line IV—IV of Figure 3, and

Figure 5 is a sectional view taken along the line V—V of Figure 4.

Referring to Figures 1 and 2, parts similar to those of the known system of Figures 3 to 5 are identified by the same reference numerals. The parking gear 4 exposed through the open part of the case 1 is fixed to the output shaft 4a, as in the known system. While the vehicle is parked, the parking pawl 3 is engaged with the parking gear 4 so that the wheels of the vehicle connected with the output shaft of the transmission are prevented from rotating, even when the vehicle is on a slope.

The parking pawl 3 is pivotally mounted on the shaft 6, one end of which is received in a bearing aperture 2a formed in the cover 2, and the other end in another bearing aperture 1a of the case. The return spring 5 is also provided on the shaft 6 to disengage the parking pawl 3 from the gear 4 when permitted by the retraction of the cam 7a.

On parking the vehicle, the cam 7a secured to the parking rod 7 is shifted to the full line position in Figure 1 to rotate the pawl 3 into engagement with the gear 4, while, on starting the vehicle, the parking rod 7 is retracted to disengage the pawl 3 from the gear 4.

In the present embodiment of the invention, a guide plate 9 is rotatably mounted on the shaft 6. The guide plate 9 is formed with a stop 9a projecting upwardly from a side thereof into the path of the pawl 3. Stop 9a is engaged with one end of the return spring 5 wound around the shaft 6. An engaging member 9b formed by bending the end part of the guide plate 9 is received in a recess 1b of the case 1, and a pair of risers 9d projected from the side of the guide plate 9 form a guide groove 9c to guide the parking rod 7. The other end of the return spring 5 forms a hook 5a and engages with a side of the parking pawl 3. By these means, the pawl 3 is biased against the inner side of the stop 9a by the spring 5 when the system is in the disengaged disposition shown in chain line in Figure 2. In other words, the pawl 3 and guide plate 9 mounted on the shaft 6 are engaged with each other through the spring 5, so that spring 5 does not act on the shaft 6.

In order to assemble the system, the parking pawl 3, the return spring 5 and the guide plate 9 are mounted on the shaft 6. One end of the spring 5 is engaged with the side of the parking pawl 3 and the other end with the stopper 9a of the guide plate 9. Then, one end of the shaft 6 is located in the bearing aperture 2a of the cover 2, the other end of the shaft 6 is engaged with the bearing aperture 1a, and the engaging member 9b formed at the end of the guide plate 9 is inserted in the recess 1b provided on the case 1. Thus the cover 2 is mounted on the case 1 together with the park lock mechanism.

By having the parking rod 7 guided by the guide groove 9c formed on the guide plate 9, the assembly is rendered much easier than the assembly of the known system in which parking rod 7 is supported by guide plates 11 provided on a supporting plate 10 as shown in Figure 4.

The cover 2 and the case 1 can be simply and easily assembled, because the parking pawl 3 and the return spring 5 can be preassembled in the cover 2 and can be kept in place because of the absence of bias on the shaft 6.

## Claims

1. A parking lock system for a vehicle of the type having an automatic transmission, a cover (2) secured to the case (1) of the automatic transmission, a shaft (6) bridging the case (1) and the cover (2), a parking pawl (3) rotatably mounted on the shaft (6), a cam (7a) for rotating the parking pawl (3) to engage it with a parking gear (4) secured to an output shaft (4a) of the transmission, and a spring (5) for biasing the parking pawl (3) to disengage it from the parking gear (4), characterised in that a guide plate (9) is engaged with the shaft (6) at one end thereof and engaged with the case (1) at the other end, and is provided with a step (9a) for the pawl (3), and in that the spring (5) is arranged to bias the parking pawl (3) against the stop (9a) of the guide plate (9) to hold the parking pawl (3) disengaged from the parking gear (4).

2. A parking lock system according to claim 1, wherein the guide plate (9) is rotatably mounted on the shaft (6), and the other end of the guide plate (9) is engaged with a recess (1b) in the case (1).

3. A parking lock system according to claim 1 or claim 2, wherein the cam (7a) is carried on a parking rod (7) which is axially movable to engage and disengage the parking pawl (3) with and from the parking gear (4).

4. A parking lock system according to claim 3, wherein the parking rod (7) is guided by a groove (9c) formed on the guide plate (9).

5. A parking lock system according to any one of the preceding claims, wherein the spring (5) acts between the pawl (3) and the guide plate (9).

## Patentansprüche

1. Parksperrvorrichtung für ein Fahrzeug mit Automatik-Getriebe, mit einer am Gehäuse (1) des Automatik-Getriebes befestigten Abdeckung, einer das Gehäuse (1) und die Abdeckung (2) verbindenden Welle (6), einer auf der Welle (6) drehbar befestigten Parkklinke (3), einem Nocken (7a) zum Drehen der Parkklinke (3), um sie in Eingriff mit einem an der Antriebswelle (4a) des Getriebes befestigten Parkzahnrad (4) zu bringen, und einer die Parkklinke (3) im Sinne ihrer Trennung vom Parkzahnrad (4) vorspannenden Feder (5), dadurch gekennzeichnet, daß eine Führungsplatte (9) mit ihrem einen Ende an der Welle (6) und ihrem anderen Ende an dem Gehäuse (1) angreift und mit einem Anschlag (9a) für die Klinke (3) versehen ist, und daß die Feder (5) so angeordnet ist, daß sie die Parkklinke (3) gegen den Anschlag (9a) der Führungsplatte (9) vorspannt, um die Parkklinke (3) außer Eingriff mit dem Parkzahnrad (4) zu halten.

2. Parksperrvorrichtung nach Anspruch 1, dadurch gekennzeichnet, daß die Führungsplatte (9) auf der Welle (6) drehbar befestigt ist und das andere Ende der Führungsplatte (9) in eine Ausnehmung (1b) des Gehäuses (1) eingreift.

3. Parksperrvorrichtung nach Anspruch 1 oder 2, dadurch gekennzeichnet, daß der Nocken (7a) auf einem Parkstößel (7) sitzt, welcher axial beweglich ist, um die Parkklinke (3) in und außer Eingriff mit dem Parkzahnrad (4) zu bringen.

4. Parksperrvorrichtung nach Anspruch 3, dadurch gekennzeichnet, daß der Parkstößel (7) in einer an der Führungsplatte (9) ausgebildeten Nut (9c) geführt ist.

5. Parksperrvorrichtung nach einem der vorstehenden Ansprüche, dadurch gekennzeichnet, daß die Feder (5) zwischen der Klinke (3) und der Führungsplatte (9) wirkt.

## Revendications

1. Frein de parking pour véhicule du type ayant une transmission automatique, un couvercle (2) fixé au carter (1) de la transmission automatique, un axe (6) inséré entre le carter (1) et le couvercle (2), un cliquet de parking (3) articulé sur l'axe (6), une came (7a) pour commander le pivotement du cliquet (3) de manière à le faire coopérer avec un engrenage de parking (4) calé sur l'arbre de sortie (4a) de la transmission et un ressort (5) tendant à désengager le cliquet de l'engrenage (4) caractérisé en ce qu'il comporte une plaque de guidage (9) dont une extrémité est engagée sur l'axe (6), tandis que l'autre extrémité est engagée dans le carter (1), ladite plaque comportant une butée (9a) pour le cliquet (3) et le ressort (5) est conçu pour pousser ledit cliquet (3) contre la butée (9a) lorsque ledit cliquet (3) est écarté de l'engrenage de parking (4).

2. Frein de parking pour véhicule, selon la revendication 1, caractérisé en ce que la plaque (9) est montée tournante par son extrémité correspondante sur l'axe (6), son autre extrémité étant engagée dans un logement (1b) du carter (1).

3. Frein de parking pour véhicule, selon la revendication 1 ou 2, caractérisé en ce que la came (7a) est portée par une tige (7) mobile axialement pour commander l'engagement ou le désengagement du cliquet (3) de l'engrenage.

4. Frein de parking pour véhicule, selon la revendication 3, caractérisé en ce que la tige (7) est guidée dans un palier (9c) de la plaque de guidage (9).

5. Frein de parking pour véhicule, selon l'une quelconque des revendications précédentes caractérisé en ce que le ressort (5) agit entre le cliquet (3) et la plaque de guidage (9).

0 143 604

# FIG. 1

# FIG. 2

1

0 143 604

# FIG. 3

PRIOR ART

# FIG. 4

PRIOR ART

2

# FIG. 5

PRIOR ART